# EUROPÄISCHE PATENTANMELDUNG

(11) **EP 1 347 182 A1**
(43) Veröffentlichungstag der Anmeldung: **24.09.2003**
(21) Anmeldenummer: 03005085.0
(22) Anmeldetag: 07.03.2003
(51) Int. Cl.: F16B 13/02, E04F 13/08

(54) **Spreizdübel**

(30) Priorität: 12.03.2002 DE 20203940 U
(71) Anmelder: fischerwerke Artur Fischer GmbH & Co. KG, 72178 Waldachtal (DE)
(72) Erfinder: Renz, Jürgen, 72202 Nagold (DE)

(57) **Zusammenfassung**

Die Erfindung betrifft einen Spreizdübel (1) aus Kunststoff mit einem durch Eindrehen einer Befestigungsschraube (11) aufspreizbaren Spreizteil (2) an den sich eine entgegen seinem Einführende (3) gerichtete und die Schraube (11) umschließende Verlängerung (4) mit einem Kopfflansch (5) anschließt. Damit der Spreizdübel (1) für unterschiedliche Klemmdicken des zu befestigenden Gegenstandes geeignet ist und eine Positionierung des Spreizteils (2) ermöglicht, bei der das dem Einführende entgegengesetzte Ende des Spreizteils bündig mit der Außenfläche des Ankergrunds abschließt, ist wenigstens ein Teilstück der Verlängerung (4) als in axialer Richtung variierbare Zone (6) ausgebildet.

## Beschreibung

Die Erfindung betrifft einen Spreizdübel aus Kunststoff mit den Merkmalen des Oberbegriffs des Anspruchs 1.

Aus der DE 1 217 580 ist ein derartiger Spreizdübel aus Kunststoff mit einem durch Eindrehen einer Befestigungsschraube aufspreizbarem Spreizteil bekannt. Das Spreizteil ist entgegen seinem Einführende mit einer die Befestigungsschraube umschließenden Verlängerung versehen, an dessen Ende ein Kopfflansch angeordnet ist. Ein solcher Dübel wird üblicherweise in Durchsteckmontage für die Befestigung von dickeren Gegenständen wie Holzlatten, Rahmen oder dgl. verwendet, wobei die Verlängerung des Spreizdübels mindestens der Klemmdicke des zu befestigenden Gegenstandes entspricht. Damit ist sichergestellt, dass der Spreizteil sich nach dem Einschieben des Spreizdübels bis zur Anlage des Kopfflansches am zu befestigenden Gegenstand sich vollständig im Bohrloch des Verankerungsgrunds befindet. Ist die Klemmdicke des Gegenstands geringer als die Länge der Verlängerung, wird der Spreizteil des Dübels im Bohrloch des Verankerungsgrunds tiefer gesetzt. In Vollbaustoffen ergibt sich durch den tiefersitzenden Spreizteil keine Nachteile, da in jeder Position des Spreizteils die volle Spreizwirkung erzielt wird.

Bei einer Verankerung des bekannten Spreizdübels in Baustoffen mit Hohlräumen, bspw. Hohlkammerbausteinen hängt die Verankerungswirkung des Spreizteils von seiner Position im Baustoff ab. Bei einem Tiefersetzen des Spreizteils ist nicht auszuschließen, dass dieser sich überwiegend im Bereich eines Hohlraums des Baustoffes befindet, so dass nur eine unzureichende Verankerungswirkung beim Eindrehen der Befestigungsschraube eintritt. In Hohlbaustoffen ist daher eine Positionierung des Spreizteils erforderlich, bei der das dem Einführende entgegengesetzte Ende des Spreizteils bündig mit der Außenfläche des Verankerungsgrunds abschließt. Bei dem bekannten Spreizdübel ist dies nur dann erreichbar, wenn die Verlängerung des Spreizdübels exakt der Klemmdicke des zu befestigenden Gegenstandes entspricht. Dies hätte allerdings zur Folge, dass für jede Klemmdicke die entsprechende Gesamtlänge eines Spreizdübels erforderlich wäre.

Der Erfindung liegt die Aufgabe zugrunde, einen Spreizdübel vorzuschlagen, der für unterschiedliche Klemmdicken des zu befestigenden Gegenstandes geeignet ist und eine Positionierung des Spreizteils ermöglicht, bei der das dem Einführende entgegengesetzte Ende des Spreizteils bündig mit der Außenfläche des Ankergrunds abschließt.

Diese Aufgabe wird erfindungsgemäß durch die Merkmale des Anspruchs 1 gelöst. Die Verlängerung des erfindungsgemäßen Spreizdübels weist wenigstens ein Teilstück auf, das als in axialer Richtung variierbare Zone bspw. als Faltbalg ausgebildet ist. Mit der bis zum Spreizteil eingesteckten Befestigungsschraube wird der Spreizdübel durch den zu befestigenden Gegenstand soweit in das Bohrloch eingesteckt, bis der Spreizteil sich vollständig im Verankerungsgrund befindet. Die gewünschte Positionierung wird dadurch erreicht, dass der Spreizdübel entsprechend der Länge des Spreizteils und der Klemmdicke des zu befestigenden Gegenstandes in das Bohrloch eingeschoben wird. Durch den Faltbalg werden unterschiedliche Klemmdicken durch Stauchen oder Strecken des Faltbalgs ausgeglichen, wobei der Kopfflansch an der Außenfläche des zu befestigenden Gegenstandes anliegt. Durch Eindrehen der Befestigungsschraube in den Spreizteil wird der Spreizdübel im Verankerungsgrund verankert, wobei bei einer geringeren Klemmdicke des zu befestigenden Gegenstandes die Befestigungsschraube durch den Dübel entsprechend weit durchgeschraubt wird, bis der Kopf der Befestigungsschraube am Befestigungsgegenstand anliegt. Da der Spreizteil auch in Hohlkammerbausteinen seine optimale Verankerungsposition aufweist, werden die höchstmöglichen Auszugswerte unabhängig von der Klemmdicke des zu befestigenden Gegenstandes erreicht.

Der Faltbalg kann entweder einstückig mit der Verlängerung oder ein separates Teil sein, das an seinen beiden Enden bspw. durch Verkleben, Verschweißen oder dgl. mit der Verlängerung verbunden ist. Die variierbare Zone kann auch durch eine elastische Gummitülle gebildet sein. Eine weitere Möglichkeit zur Bildung einer variierbaren Zone besteht darin, die Verlängerung des Spreizdübels zu teilen, wobei die beiden Teile teleskopartig ineinander gesteckt sind.

In einer weiteren Ausgestaltung der Erfindung ist es zweckmäßig, an der Übergangsstelle des Spreizteils zur Verlängerung Anschlagrippen mit zum Einführende des Spreizteils weisenden Anschlagsflächen anzuordnen. Beim Einschieben des Spreizdübels kommen die Anschlagrippen an der Außenfläche des Ankergrunds zur Anlage und bilden damit eine Einschiebsperre für das genaue Positionieren des Spreizteils im Verankerungsgrund.

Die Erfindung wird nachfolgend anhand eines in der Zeichnung dargestellten Ausführungsbeispiels näher erläutert. Es zeigen:
- Figur 1: eine perspektivische Darstellung eines erfindungsgemäßen Spreizdübels; und
- Figur 2: den in einem Mauerwerk verankerten Spreizdübel gemäß Figur 1.

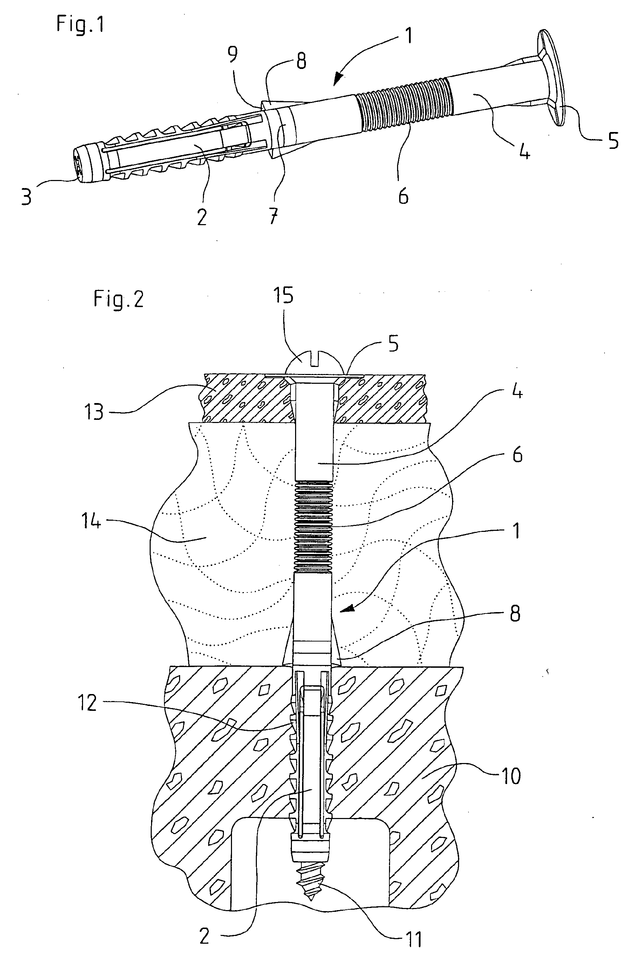

Der in Figur 1 dargestellte Spreizdübel 1 weist einen Spreizteil 2 auf, an den sich entgegen seinem Einführende 3 eine Verlängerung 4 anschließt. Am Ende der Verlängerung 4 ist ein radial abstehender Kopfflansch 5 angeordnet. Ein Teilstück der Verlängerung 4 ist als variierbare Zone, im Ausführungsbeispiel als Faltbalg 6 ausgebildet, der durch Stauchung oder Dehnung in axialer Richtung Längenänderungen der Verlängerung 4 ermöglicht. Der Faltbalg 6 kann entweder einstückig mit dem Spreizdübel 1 im Spritzgussverfahren aus Kunststoff hergestellt werden. Eine alternative Fertigungsmöglichkeit besteht darin, den Faltbalg 6 als separates Teil auszubilden, das an seinen beiden Enden jeweils mit der Verlängerung 4 bspw. durch Ultraschweißen oder Verkleben verbunden ist.

An der Übergangsstelle 7 des Spreizteils 2 zur Verlängerung 4 sind Anschlagrippen 8 mit zum Einführende 3 des Spreizteils 2 weisenden Anschlagflächen 9 angeordnet.

In Figur 2 ist die Montage und Verankerung des erfindungsgemäßen Spreizdübels 1 in einem aus Hohllochziegeln bestehenden Ankergrund 10 dargestellt. Mit der bis zum Spreizteil 2 eingesteckten Befestigungsschraube 11 wird der Spreizdübel 1 in das Bohrloch 12 des Ankergrunds 10 durch die Verkleidungsplatte 13 und der Dämmplatte 14 soweit eingeschoben, bis die Anschlagrippen 8 an der Außenfläche des Ankergrunds 10 aufsitzen. Der Spreizteil 2 hat damit die optimale Verankerungsposition in dem den Ankergrund 10 bildenden Hohlbaustein. Durch Dehnung oder Stauchung des Faltbalgs 6 passt sich die Verlängerung 4 dem Abstand zwischen Außenfläche der Verkleidungsplatte 13 und der Außenfläche des Verankergrunds 10 an. Die nach dem Einschieben des Spreizdübels mindestens um die Länge des Spreizteils 2 den Kopfflansch 5 überragende Befestigungsschraube 11 wird anschließend zur Verankerung des Spreizdübels 1 im Ankergrund 10 in den Spreizteil 2 soweit eingedreht, bis der Schraubenkopf 15 am Kopfflansch 5 anliegt. Da die Befestigungsschraube 11 zweckmäßigerweise der größtmöglichen Gesamtlänge des Spreizdübels 1 entspricht, wird die Befestigungsschraube 11 durch den Spreizteil bei einer geringeren Klemmdicke entsprechend weit durch den Spreizteil 2 durchgeschraubt.

## Patentansprüche

1. Spreizdübel aus Kunststoff mit einem durch Eindrehen einer Befestigungsschraube aufspreizbaren Spreizteil, an den sich eine entgegen seinem Einführende gerichtete und die Schraube umschließende Verlängerung mit einem Kopfflansch anschließt, **dadurch gekennzeichnet, dass** wenigstens ein Teilstück der Verlängerung (4) als in axialer Richtung variierbare Zone (6) ausgebildet ist.

2. Spreizdübel nach Anspruch 1, **dadurch gekennzeichnet, dass** die variierbare Zone (6) ein Faltbalg ist.

3. Spreizdübel nach Anspruch 2, **dadurch gekennzeichnet, dass** der Faltbalg (6) einstückig mit der Verlängerung (4) ist.

4. Spreizdübel nach Anspruch 2, **dadurch gekennzeichnet, dass** der Faltbalg (6) ein separates Teil ist, das an seinen beiden Enden mit der Verlängerung (4) verbunden ist.

5. Spreizdübel nach Anspruch 1, **dadurch gekennzeichnet, dass** an der Übergangsstelle (7) des Spreizteils (2) zur Verlängerung (4) Anschlagrippen (8) mit zum Einführende (3) des Spreizteils (2) weisenden Anschlagflächen (9) angeordnet sind.
